# EUROPÄISCHE PATENTANMELDUNG

(11) **EP 2 653 849 A2**
(43) Veröffentlichungstag der Anmeldung: **23.10.2013**
(21) Anmeldenummer: 13163709.2
(22) Anmeldetag: 15.04.2013
(51) Int. Cl.: G01M 15/04

(54) **Motorenprüfstand**

(30) Priorität: 18.04.2012 AT 501372012
(71) Anmelder: AVL List GmbH, 8020 Graz (AT)
(72) Erfinder: Maier, Gerhard, 8071 Wagersbach (AT); Greylinger, Wilhelm, 8680 Mürzzuschlag (AT); Kögl, Rene, 8481 Weinburg (AT)
(74) Vertreter: Babeluk, Michael

(57) **Zusammenfassung**

Die Erfindung betrifft einen Motorenprüfstand (30) mit einer Einzylinder-Versuchsbrennkraftmaschine (40), insbesondere einer Einzylinder-Zweitakt-Kreuzkopfbrennkraftmaschine, mit einem eine Kurbelwelle (8) aufnehmenden Kurbelgehäuse (70), auf welchem austauschbar ein Zylindergehäuse (6) mit einem Zylinder (2) zur Aufnahme eines hin- und hergehenden Kolbens (3) aufgesetzt ist, mit zumindest einer durch die Kurbelwelle (8) angetriebenen Massenausgleichseinrichtung (50). Um den Umbau des Motorenprüfstandes für unterschiedliche Motorenvarianten zu vereinfachen, ist vorgesehen, dass die Massenausgleichseinrichtung (50) in einem prüfstandsfesten Grundrahmen (11) integriert ist, wobei das Kurbelgehäuse (70) fest mit dem Grundrahmen (11) verbunden ist.

## Beschreibung

Die Erfindung betrifft einen Motorenprüfstand mit einer Einzylinder-Versuchs-brennkraftmaschine, insbesondere einer Einzylinder-Zweitakt-Kreuzkopfbrennkraftmaschine, mit einem eine Kurbelwelle aufnehmenden Kurbelgehäuse, auf welchem austauschbar ein Zylindergehäuse mit einem Zylinder zur Aufnahme eines hin- und hergehenden Kolbens aufgesetzt ist, mit zumindest einer durch die Kurbelwelle angetriebenen Massenausgleichseinrichtung.

Aus der AT 263 454 B ist ein Einzylinder-Versuchsmotor mit einem auf das Kurbelgehäuse aufgesetzten austauschbaren Zylinderblock und Zylinderkopf bekannt. Das Kurbelgehäuse wird bei Umrüstung des Versuchsmotors im Wesentlichen beibehalten. Dieser Einzylinder-Versuchsmotor ist für die Entwicklung rasch laufender Brennkraftmaschinen konzipiert, aber nicht geeignet für die Entwicklung von Zweitakt-Kreuzkopf-Großmotoren, beispielsweise mit Bohrungen zwischen 350 und 1.000 mm und Kolbenhüben beispielsweise zwischen 1.500 mm und 3.500 mm.

Bei konventionellen Versuchsaufbauten für Einzylindermotoren großer Baugröße ist der Umbau auf eine andere Motorenvariante ein sehr schwieriges und zeitintensives Unterfangen, da entweder der komplette Motor und/oder auch sämtliche Aufbaukomponenten ausgetauscht werden müssen.

Aufgabe der Erfindung ist es, diese Nachteile zu vermeiden, und den Umbau auf eine andere Motorenvariante bei langsam laufenden Einzylinder-Zweitakt-Kreuzkopfbrennkraftmaschinen zu vereinfachen.

Erfindungsgemäß wird dies dadurch erreicht, dass die Massenausgleichseinrichtung in einem prüfstandsfesten Grundrahmen integriert ist, wobei das Kurbelgehäuse fest mit dem Grundrahmen verbunden ist.

Der Grundrahmen mit der Massenausgleichseinrichtung ist fester Bestandteil des Motorenprüfstandes und weist mehrere Massenausgleichswellen, vorzugsweise zwei Massenausgleichswellen erster Ordnung und zwei Massenausgleichswellen zweiter Ordnung auf, welche über einen Rädertrieb, vorzugsweise ein Zahnradgetriebe oder ein Zugmittelgetriebe, durch die Kurbelwelle antreibbar sind.

Das Kurbelgehäuse besteht aus einem Unterteil und einem Oberteil, wobei der Kurbelgehäuseunterteil mit dem Grundrahmen verbunden ist. Der Kurbelgehäuseoberteil ist lösbar am Kurbelgehäuseunterteil angebracht.

Die Versuchsbrennkraftmaschine weist einen Kreuzkopf auf, welcher im Zylindergehäuse verschiebbar gelagert ist. Der Kreuzkopf ist einerseits über eine Pleuelstange mit der Kurbelwelle und andererseits über eine Kolbenstange mit dem im Zylinder hin- und hergehenden Kolben beweglich verbunden. Dabei ist es vorteilhaft, wenn der Zylinder durch eine austauschbare Laufbuchse gebildet ist.

Die Kurbelwelle ist über eine Treibwelle mit einem Schwungrad und einer Bremseinrichtung verbunden, wobei zwischen dem Schwungrad und der Bremseinrichtung ein externes Außenlager des Motorenprüfstandes für die Treibwelle angeordnet sein kann. Die Bremseinrichtung ist vorzugsweise als Wasserwirbelbremse ausgebildet, um die hohen Leistungen der Versuchsbrennkraftmaschine aufnehmen zu können.

Besonders vorteilhaft ist es, wenn die Kurbelwelle mit einer elektrischen Maschine, vorzugsweise einen Start- und/oder Schlepp-Motor, verbunden ist. Über die elektrische Maschine ist es möglich, die Brennkraftmaschine zu schleppen oder auf eine Startdrehzahl zu bringen. Über die elektrische Maschine kann aber auch ein Bremsmoment für die Versuchsbrennkraftmaschine aufgebracht werden.

Eine wesentliche Erleichterung ergibt sich beim Umbau des Motorenprüfstandes dadurch, dass der Motorenprüfstand einen universell einsetzbaren Basisaufbau und zumindest ein veränderliches Motormodul aufweist. Der Basisaufbau bleibt dabei praktisch für alle möglichen Motorvarianten unverändert erhalten, die Motorenmodule können je nach Motorvariante flexibel getauscht werden. Somit ist es nicht mehr notwendig, beim Wechsel von einer Motorvariante zu einer anderen Motorvariante alle Komponenten des Motorenprüfstandes auszutauschen. Dadurch können Umrüstzeiten und Kosten wesentlich reduziert werden.

Besonders vorteilhaft ist es, wenn der Basisaufbau die Komponenten, Grundrahmen, Massenausgleichswellen, Kurbelgehäuseunterteil, Kurbelgehäuseoberteil, Schwungrad, Bremseinrichtung und elektrische Maschine, vorzugsweise auch ein Übertragungsgetriebe zwischen Kurbelwelle und Massenausgleichseinrichtung zum Antrieb der Massenausgleichswellen, aufweist. Ein großer Teil des Motorenprüfstandes muss somit nicht beim Umrüsten verändert werden.

Trotzdem ergibt sich eine hohe Flexibilität für verschiedene Motorenvarianten, wenn zumindest ein Motormodul zumindest eine der Komponenten Zylindergehäuse, Zylinder, Kurbelwelle, Pleuelstange, Kreuzkopf, Kolbenstange und Kolben aufweist.

Um bei verschiedenen Motorgrößen die Anforderungen an den Massenausgleich erfüllen zu können, ist im Rahmen der Erfindung vorgesehen, dass auf den Massenausgleichswellen jeweils zumindest eine austauschbare und/oder veränderliche Ausgleichsmasse anordbar ist. Die Ausgleichsmassen können dabei an Anforderungen des jeweiligen Motors angepasst werden.

Um die unterschiedlichen Belastungen und Anforderungen von Schmierstellen zu berücksichtigen, ist es vorteilhaft, wenn der Motorenprüfstand mehrere Schmierölkreisläufe aufweist, wobei vorzugsweise zumindest zwei Schmierölkreisläufe getrennt von einander ausgebildet sind.

Dabei kann vorgesehen sein, dass ein erster Schmierölkreislauf für die Schmierölversorgung der Lagerstellen der Kurbelwelle, der Pleuelstange, der Massenausgleichswellen und des Übertragungsgetriebes, ein zweiter Schmierölkreislauf für die Schmierölversorgung des Kreuzkopfes und ein dritter Schmierölkreislauf für die Schmierung des Kolbens konzipiert sein.

Die Erfindung wird im Folgenden anhand der Figuren näher erläutert. Es zeigen schematisch:

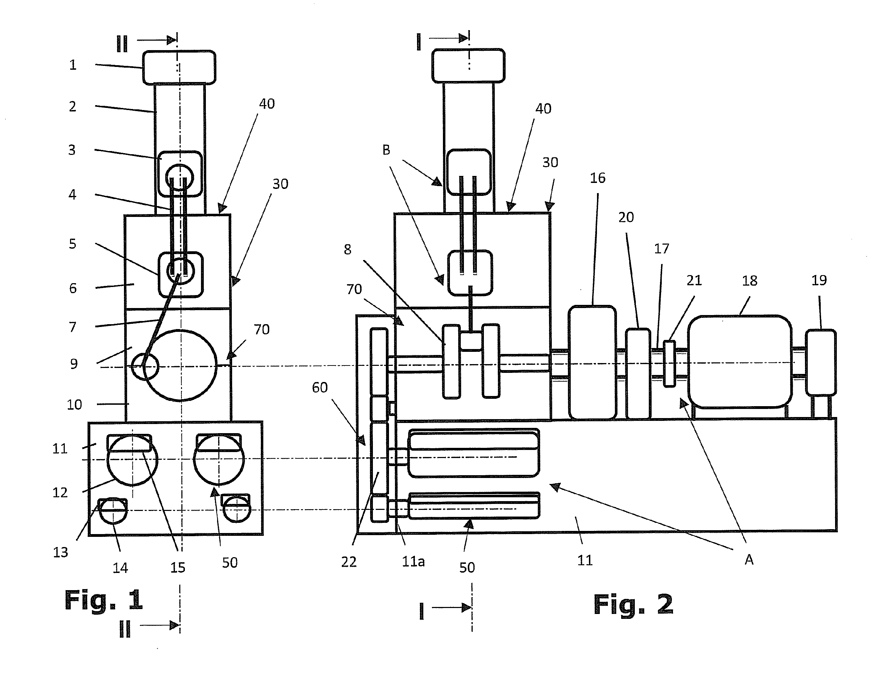

- Fig. 1: den Motorenprüfstand in einem Schnitt gemäß der Linie I-I in Fig. 2;
- Fig. 2: den Motorenprüfstand in einem Schnitt gemäß der Linie II-II in Fig. 1.

Der Versuchsaufbau des Motorenprüfstandes 30 für eine Einzylinder-Versuchs-brennkraftmaschine 40 weist grundsätzlich Komponenten des Basisaufbaues A auf, die am Motorenprüfstand 30 verbleiben und so ausgelegt sind, dass sie für verschiedene Motorengrößen geeignet sind. Zu diesen Komponenten zählen Grundrahmen 11 mit Massenausgleichseinrichtung 50, Kurbelgehäuse 70 mit Kurbelgehäuseunterteil 10 und Kurbelgehäuseoberteil 9, Schwungrad 16, Außenlager 20, Treibwelle 17, Kupplung 21, Bremseinrichtung 18 und elektrische Maschine 19, welche als Start und/oder Schleppmotor fungiert.

Weiters weist der Versuchsaufbau zumindest ein Motormodul B mit den motorspezifischen Komponenten Zylinderdeckel 1, Zylinder 2, Kolben 3, Kolbenstange 4, Kreuzkopf 5, Zylindergehäuse 6, Pleuelstange 7, und Kurbelwelle 8 auf. Die Komponenten des Motormoduls B der Einzylinder-Versuchsbrennkraftmaschine 40 werden immer jeweils auf die neue Motorengröße angepasst.

Im Grundrahmen 11 ist eine Massenausgleichseinrichtung 50 erster und zweiter Ordnung integriert. Die auf den Massenausgleichswellen 12, 14 erster und zweiter Ordnung befestigten Massenausgleichsgewichte 13, 15 werden jeweils auf die Erfordernisse der verschiedenen Motorgrößen abgestimmt. Im vorderen Bereich 11a des Grundrahmens 11 ist ein Übertragungsgetriebe 60 für die Massenausgleichswellen 12, 14 angeordnet, wobei das Übertragungsgetriebe 60 durch ein Zahnradgetriebe 22 gebildet sein kann. Alternativ zum Zahnradgetriebe 22 kann auch ein Zugmittelgetriebe eingesetzt werden. Der Antrieb der Massenausgleichswellen 12, 14 kann ausgehend von der Kurbelwelle 8 über das Zahnradgetriebe 22 oder bei Motorvariante mit sehr großen Hüben über einen Kettentrieb erfolgen.

Auf dem Grundrahmen 11 sind das Kurbelgehäuseunterteil 10 und das Kurbelgehäuseoberteil 9 positioniert, wobei die Kurbelwelle 8 liegend im Kurbelgehäuseunterteil 10 angeordnet ist. Die Hauptlagerung der Kurbelwelle 8 ist auf die größte mögliche Motorvariante abgestimmt, somit können Kurbelgehäuseober-und unterteil 9, 10 für jede Motorvariante unverändert übernommen werden. Die Kurbelwelle 8 ist drehbar mit der Treibwelle 17 des Basisaufbaues A verbunden. In Längsrichtung der Kurbelwelle 8 ist auf der Treibwelle 17 ein Schwungrad 16 befestigt, welches unverändert für alle möglichen Motorgrößen einsetzbar ist. Dem Schwungrad 16 nachgeschaltet ist das Außenlager 20, welches die Treibwelle 17 abstützt und ebenfalls immer im Grundrahmen 11 verbleiben kann. Zwischen dem Außenlager 20 und der Bremseinrichtung 18 ist eine Wellenkupplung 21 angeordnet, welche so dimensioniert ist, dass sie die Anforderungen über den gesamten Anwendungsbereich abdeckt und somit auch unverändert für alle möglichen Versuchsmotorgrößen im vorgesehenen Bereich verwendet werden kann.

Die auf dem Grundrahmen 11 befestigte Bremseinrichtung 18, welche vorteilhafterweise als Wasserwirbelbremse ausgeführt ist, wird zum Anfahren von definierten Motorlastpunkten eingesetzt und verbleibt ebenfalls am Grundrahmen 11. Um trotz der Bremseinrichtung 18 einen Motorstart zu ermöglichen, ist eine elektrische Maschine 19 vorgesehen, mit der die Einzylinder-Versuchsbrennkraftmaschine 40 gestartet werden kann. Ebenso kann die elektrische Maschine 19 zum Schleppen der Einzylinder-Versuchs-Brennkraftmaschine 40 eingesetzt werden. Im Schleppbetrieb wird der Versuchsmotor ohne Motorverbrennung auf eine definierte Drehzahl gebracht, um Messungen durchführen zu können. Weiters kann die elektrische Maschine 19 auch als unterstützende Leistungsbremse eingesetzt werden.

Die Komponenten des Motormoduls B werden bei jedem Wechsel einer Motorvariante auf die zu betreibende Motorgröße abgestimmt und müssen somit in der Regel bei einem Motorenwechsel vom Basisaufbau A getrennt und gewechselt werden. Die Kurbelwelle 8 hat zwar stets den gleichen Durchmesser der Hauptlager, Hub- und Pleuelzapfendurchmesser der Kurbelwelle 8 sind aber durch den jeweiligen Versuchsmotor vorgegeben. Mit dem beschriebenen Motorprüfstand können Kolbenhübe zwischen 1.500 mm und 3.500 mm realisiert werden. Um diese Bandbreite an Kolbenhüben umsetzen zu können, wird bei jedem Wechsel jeweils ein entsprechendes Zylindergehäuse 6 eingesetzt. Im Zylindergehäuse 6 wird der Kreuzkopf 5 der Einzylinder-Versuchbrennkraftmaschine 40 aufgenommen.

Grundsätzlich ist die Verwendung von drei verschiedenen Schmierölkreisen möglich, die jeweils unterschiedliche Druckniveaus aufweisen können. Dabei dient ein erster Schmierölkreis zur Ölversorgung der Lagerstellen der Kurbelwelle 8, der Pleuelstange 7, der Massenausgleichswellen 12, 14 und des Übertragungsgetriebes 60. Ein zweiter Schmierölkreis dient für die Schmierölversorgung des Kreuzkopfes 5, bei welchem oft ein unterschiedliches Druckniveau gewünscht ist. Ein dritter Schmierölkreis kann für die Schmierung des Kolbens 3 eingesetzt werden, welcher bevorzugt getrennt vom ersten und zweiten Schmierölkreis ausgeführt wird.

Mit dem beschriebenen Motorenprüfstand kann eine flexible Versuchsbasis geschaffen werden, um auf kostengünstige Weise verschieden große Einzylinder-Versuchsbrennkraftmaschinen 40, insbesondere Zweitakt-Kreuzkopfmotoren entwickeln und testen zu können.

## Patentansprüche

1. Motorenprüfstand (30) mit einer Einzylinder-Versuchsbrennkraftmaschine (40), insbesondere einer Einzylinder-Zweitakt-Kreuzkopfbrennkraftmaschine, mit einem eine Kurbelwelle (8) aufnehmenden Kurbelgehäuse (70), auf welchem austauschbar ein Zylindergehäuse (6) mit einem Zylinder (2) zur Aufnahme eines hin- und hergehenden Kolbens (3) aufgesetzt ist, mit zumindest einer durch die Kurbelwelle (8) angetriebenen Massenausgleichseinrichtung (50), **dadurch gekennzeichnet, dass** die Massenausgleichseinrichtung (50) in einem prüfstandsfesten Grundrahmen (11) integriert ist, wobei das Kurbelgehäuse (70) fest mit dem Grundrahmen (11) verbunden ist.

2. Motorenprüfstand (30) nach Anspruch 1, **dadurch gekennzeichnet, dass** die Massenausgleichseinrichtung (50) zwei Massenausgleichswellen (12) erster Ordnung und zwei Massenausgleichswellen (14) zweiter Ordnung aufweist, welche im Grundrahmen (11) drehbar gelagert sind.

3. Motorenprüfstand (30) nach Anspruch 1 oder 2, **dadurch gekennzeichnet, dass** das Kurbelgehäuse (70) einen fest mit dem Grundrahmen (11) verbundenen Kurbelgehäuseunterteil (10) und einen mit dem Kurbelgehäuseunterteil (10) lösbar verbundenen Kurbelgehäuseoberteil (9) aufweist, wobei Kurbelgehäuseunterteil (10) und Kurbelgehäuseoberteil (9) Hauptlager für die Kurbelwelle (8) ausbilden, die auf die für den Motorenprüfstand (30) größtmögliche Motorvariante ausgelegt sind.

4. Motorenprüfstand (30) nach einem der Ansprüche 1 bis 3, **dadurch gekennzeichnet, dass** im Zylindergehäuse (6) ein Kreuzkopf (5) verschiebbar gelagert ist.

5. Motorenprüfstand (30) nach einem der Ansprüche 1 bis 4, **dadurch gekennzeichnet, dass** der Zylinder (2) durch eine austauschbare Laufbuchse gebildet ist.

6. Motorenprüfstand (30) nach einem der Ansprüche 1 bis 5, **dadurch gekennzeichnet, dass** mit der Kurbelwelle (8) ein Schwungrad (16) drehfest verbunden ist.

7. Motorenprüfstand (30) nach einem der Ansprüche 1 bis 6, **dadurch gekennzeichnet, dass** die Kurbelwelle (8), vorzugsweise über zumindest eine Wellenkupplung (21), mit einer Bremseinrichtung (18) verbunden ist.

8. Motorenprüfstand (30) nach Anspruch 7, **dadurch gekennzeichnet, dass** die Bremseinrichtung (18) durch eine Wasserwirbelbremse gebildet ist.

9. Motorenprüfstand (30) nach einem der Ansprüche 1 bis 8, **dadurch gekennzeichnet, dass** die Kurbelwelle (8) mit einer elektrischen Maschine (9), vorzugsweise einem elektrischen Start- und/oder Schlepp-Motor, verbunden ist.

10. Motorenprüfstand (30) nach einem der Ansprüche 1 bis 9, **dadurch gekennzeichnet, dass** der Motorenprüfstand (30) einen universell für verschiedene Versuchsbrennkraftmaschinen (40) einsetzbaren Basisaufbau (A) und zumindest ein veränderliches Motormodul (B) aufweist.

11. Motorenprüfstand (30) nach Anspruche 10, **dadurch gekennzeichnet, dass** der Basisaufbau (A) die Komponenten Grundrahmen (11), Massenausgleichswellen (12, 14), Kurbelgehäuseunterteil (10), Kurbelgehäuseoberteil (9), Schwungrad (16), Bremseinrichtung (18) und elektrische Maschine (19), vorzugsweise auch ein Übertragungsgetriebe (60) zum Antrieb der Massenausgleichseinrichtung (50), aufweist.

12. Motorenprüfstand (30) nach Anspruch 10 oder 11, **dadurch gekennzeichnet, dass** zumindest ein Motormodul (B) zumindest eine der Komponenten Zylindergehäuse (6), Zylinder (2), Kurbelwelle (8), Pleuelstange (7), Kreuzkopf (5), Kolbenstange (4) und Kolben (3) aufweist.

13. Motorenprüfstand (30) nach einem der Ansprüche 1 bis 12, **dadurch gekennzeichnet, dass** auf den Massenausgleichswellen (12, 14) jeweils zumindest ein austauschbares und/ oder veränderliches Ausgleichsgewicht (13, 15) anordbar ist.

14. Motorenprüfstand (30) nach einem der Ansprüche 1 bis 13, **dadurch gekennzeichnet, dass** der Motorenprüfstand (30) mehrere Schmierölkreisläufe aufweist, wobei vorzugsweise zumindest zwei Schmierölkreisläufe getrennt von einander ausgebildet sind.

15. Motorenprüfstand (30) nach Anspruch 14, **dadurch gekennzeichnet, dass** ein erster Schmierölkreislauf für die Schmierölversorgung der Lagerstellen der Kurbelwelle (8), der Pleuelstange (7), der Massenausgleichswellen (12, 14) und des Übertragungsgetriebes (60) konzipiert ist.

16. Motorenprüfstand (30) nach Anspruch 14 oder 15, **dadurch gekennzeichnet, dass** ein zweiter Schmierölkreislauf für die Schmierölversorgung des Kreuzkopfes (5) konzipiert ist.

17. Motorenprüfstand (30) nach einem der Ansprüche 14 bis 16, **dadurch gekennzeichnet, dass** ein dritter Schmierölkreislauf für die Schmierung des Kolbens (3) konzipiert ist.

18. Motorenprüfstand (30) nach einem der Ansprüche 14 bis 17, **dadurch gekennzeichnet, dass** zumindest zwei Schmierölkreisläufe unterschiedliche Druckniveaus aufweisen.
